# EUROPÄISCHE PATENTSCHRIFT

(11) **EP 3 123 450 B1**
(45) Veröffentlichungstag und Bekanntmachung des Hinweises auf die Patenterteilung: **14.12.2022**
(21) Anmeldenummer: 15705486.7
(22) Anmeldetag: 28.01.2015
(51) Int. Cl.: G06T 19/00, G06V 20/56, G06T 7/00

(54) **VERFAHREN UND VORRICHTUNG ZUR ANZEIGE VON OBJEKTEN AUF EINER FAHRZEUGANZEIGE**
METHOD AND DEVICE FOR DISPLAYING OBJECTS ON A VEHICLE DISPLAY
PROCÉDÉ ET DISPOSITIF DE VISUALISATION D'OBJETS SUR UN AFFICHAGE DE VÉHICULE

(30) Priorität: 25.03.2014 DE 102014205511
(43) Veröffentlichungstag der Anmeldung: 01.02.2017
(73) Patentinhaber: Continental Autonomous Mobility Germany GmbH, 85057 Ingolstadt (DE)
(72) Erfinder: SCHREPFER, Jörg, 96355 Tettau (DE)
(74) Vertreter: Continental Corporation
(86) Internationale Anmeldenummer: PCT/DE2015/200036
(87) Internationale Veröffentlichungsnummer: WO 2015/144145

(56) Entgegenhaltungen:
- EP-A1- 1 926 048
- EP-A1- 1 926 048
- EP-A1- 1 926 048
- EP-A1- 2 178 064
- EP-A1- 2 178 064
- DE-A1- 10 335 601
- DE-A1- 10 335 601
- DE-A1-102010 040 803
- DE-A1-102010 040 803
- DE-A1-102010 042 026
- DE-A1-102010 042 026
- US-A1- 2007 053 551
- US-A1- 2007 053 551
- HIROSHI YASUDA ET AL: "Toward a practical wall see-through system for drivers: How simple can it be?", MIXED AND AUGMENTED REALITY (ISMAR), 2012 IEEE INTERNATIONAL SYMPOSIUM ON, IEEE, 5. November 2012 (2012-11-05), Seiten 333-334, XP032309106, DOI: 10.1109/ISMAR.2012.6402600 ISBN: 978-1-4673-4660-3
- PEDRO GOMES ET AL: "Making Vehicles Transparent Through V2V Video Streaming", IEEE TRANSACTIONS ON INTELLIGENT TRANSPORTATION SYSTEMS, IEEE, PISCATAWAY, NJ, USA, Bd. 13, Nr. 2, 1. Juni 2012 (2012-06-01), Seiten 930-938, XP011445717, ISSN: 1524-9050, DOI: 10.1109/TITS.2012.2188289
- Claudio Rosito Jung ET AL: "Augmented reality with automaitc camera calibration for driver assistance systems", Proceedings of the XI symposium on virtual and augmented reality, 1. Juni 2009 (2009-06-01), Seiten 29-36, XP055113740, Porto Alegre,Brazil Gefunden im Internet: URL:http://www.lbd.dcc.ufmg.br/colecoes/sv r/2009/001.pdf [gefunden am 2014-04-11]
- ZHAOXIANG ZHANG ET AL: "EDA Approach for Model Based Localization and Recognition of Vehicles", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1. Juni 2007 (2007-06-01), Seiten 1-8, XP031114737, ISBN: 978-1-4244-1179-5
- Continental: "Continental Monitors the Whole Vehicle Surrounding", , 2013, XP002742972, Gefunden im Internet: URL:http://www.continental-corporation.com /www/download/pressportal_com_en/themes/pr ess_releases/1_topics/fairs_events/downloa d/pr_doc_2013_09_10_iaa_surround_view_en.d oc [gefunden am 2015-07-31]

## Beschreibung

Die Erfindung betrifft ein Verfahren zur Anzeige von Objekten, insbesondere Fahrzeugobjekten, auf einer Fahrzeuganzeige eines Fahrzeuges, ein Surround View-System für ein Fahrzeug, und ein Fahrzeug mit einem Surround View-System.

Fahrzeuge werden zunehmend mit Surround View-Systemen ausgerüstet, welche aus Kamerabildern ein Anzeigenbild berechnen, welches den Fahrer des Fahrzeuges bei der Durchführung von Fahrmanövern, beispielsweise Einparken oder Rückwärtsfahren, unterstützt. Während des Fahrens trifft der Fahrer des Fahrzeuges durch Unterstützung des Surround View-Systems Entscheidungen, um sein Fahrzeug sicher im Straßenverkehr zu lenken. Darüber hinaus kann das Surround View-System den Fahrer bei seiner Orientierung in der Umgebung unterstützen, sodass er beispielsweise leichter zu einem Fahrziel gelangen kann. Um diesem Fahrer ein möglichst realistisches Bild der Fahrzeugumgebung zu geben, werden auch zunehmend dreidimensionale Anzeigenbilder auf der Fahrzeuganzeige dargestellt, um den Fahrer bei der Entscheidungsfindung und Orientierung möglichst effizient zu unterstützen.

Ein Nachteil herkömmlicher Surround View-Systeme besteht allerdings darin, dass Objekte, die von Fahrzeugsensoren, insbesondere Fahrzeugkameras, erfasst werden, aus dem Blickwinkel des jeweiligen Fahrzeugsensors aufgenommen werden und andere Seiten des jeweiligen Objektes nicht erkennbar bzw. sichtbar sind. Darüber hinaus kommt es in vielen Fällen vor, dass andere Fahrzeugobjekte vollständig oder teilweise durch andere Objekte, insbesondere andere Fahrzeugobjekte, verdeckt sind, sodass eine realistische Anzeige des verdeckten Fahrzeugobjektes nicht möglich ist.

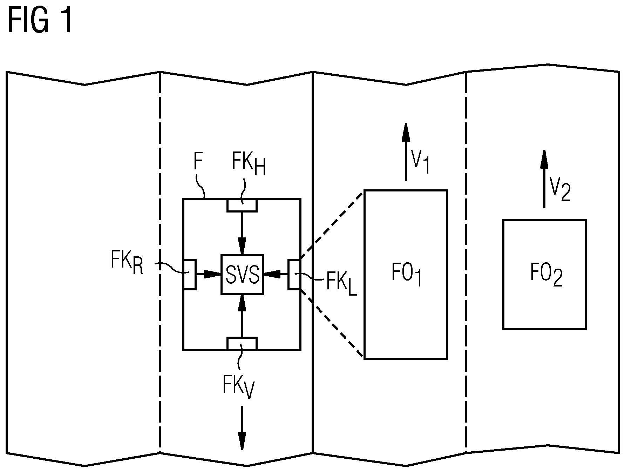

Dieses Problem wird beispielhaft anhand der Fig. 1 erläutert. Bei dem in Fig. 1 dargestellten Beispiel handelt es sich um eine Verkehrssituation, bei der sich ein Fahrzeug F und zwei weitere Fahrzeugobjekte auf einer vierspurigen Straße begegnen. Bei dem dargestellten Beispiel hat die Straße vier Fahrstreifen mit jeweils zwei Fahrstreifen in jede Richtung. Bei der in Fig. 1 dargestellten Straße handelt es sich beispielsweise um eine Schnellstraße, die in beiden Fahrtrichtungen zwei Fahrstreifen besitzt. Das Fahrzeug F verfügt in dem dargestellten Beispiel über ein Surround View-System SVS, das Kamerabilder von vier Fahrzeugkameras erhält, die auf der linken, rechten, vorderen und hinteren Seite des Fahrzeuges angebracht sind. Im Gegenverkehr überholt in dem dargestellten Beispiel ein erstes Fahrzeugobjekt FO1, beispielsweise ein PKW oder ein Lastwagen, ein zweites Fahrzeugobjekt FO2 und verdeckt dieses zumindest teilweise. Die auf der linken Seite des Fahrzeuges F befindliche Fahrzeugkamera FK_{L} erfasst somit lediglich die linke Seite des ersten Fahrzeugobjektes FO1 und darüber hinaus eventuell Teilbereiche der linken Seite des verdeckten zweiten Fahrzeugobjektes FO2. Zu einem bestimmten Zeitpunkt ist das zweite Fahrzeugobjekt FO2 vollständig von dem ersten Fahrzeugobjekt FO1 für die Fahrzeugkamera FK_{L} verdeckt, sodass eine realistische Darstellung des Fahrzeugobjektes FO2 in einer dreidimensionalen Szene auf einem Fahrzeugdisplay des Surround View-Systems SVS des Fahrzeugs F nicht möglich ist. Darüber hinaus besteht bei gewissen Objekten die Möglichkeit, dass die Ansicht des betroffenen Objektes lediglich von einer Seite keinen realistischen Eindruck des jeweiligen Objektes ergibt. Weiter besteht die Gefahr, dass die Fahrzeugbilder der in der Umgebung des Fahrzeuges F befindlichen Fahrzeugobjekte oder sonstiger Objekte durch Umgebungsbedingungen, insbesondere Wetterbedingungen, beispielsweise Schneefall, stark beeinträchtigt werden.

Pedro Gomes et al., "Making Vehicles Transparent Through V2V Video Streaming", IEEE Transactions on Intelligent Transportation Sytsems, Bd. 13, Nr. 2, 2012, Seiten 930-938, offenbaren ein Verfahren, wobei ein erstes Fahrzeug mittels Funkverbindung mit einem vorausfahrenden zweiten Fahrzeug die Länge, Höhe und Breite des zweiten Fahrzeugs sowie einen von dem zweiten Fahrzeug aufgenommenen Videostream empfängt. In einer Displayanzeige des ersten Fahrzeugs wird anhand der Abmessungen des zweiten Fahrzeugs ein röhrenförmiges Objekt angezeigt, welches das zweite Fahrzeug darstellt, in welchem der Videostream abgespielt wird.

Die Druckschrift DE 103 35 601 A1 offenbart ein Verfahren zur computergestützten Klassifizierung von dreidimensionalen Objekten zu einer oder mehreren vorgegebenen Objektklassen, bei dem ein Objekt messtechnisch erfasst wird.

Die Druckschrift DE 10 2010 040 803 A1 offenbart ein visuelles Fahrerinformations- und Warnsystem für einen Fahrer eines Kraftfahrzeugs, welches eine Informationsdarstellungseinrichtung, mindestens eine Umfeldinformationsdatenerfassungs- und/oder mindestens eine Umfeldinformationsdatenaustauscheinrichtung umfasst.

Es ist eine Aufgabe der vorliegenden Erfindung, ein Verfahren zur Anzeige von Objekten auf einer Fahrzeuganzeige, ein Surround View-System für ein Fahrzeug, und ein Fahrzeug mit einem Surround View-System zu schaffen, wobei die Objekte teilweise von anderen Objekten verdeckt sein können, und wobei die Objekte möglichst detailreich dargestellt werden, sodass der Fahrer bei Fahrentscheidungen und seiner Orientierung im Verkehrsfluss möglichst effizient unterstützt wird.

Diese Aufgabe wird erfindungsgemäß durch ein Verfahren zur Anzeige von Objekten auf einer Fahrzeuganzeige, ein Surround View-System für ein Fahrzeug, und ein Fahrzeug mit einem Surround View-System gelöst, wie im beigefügten Anspruchssatz beschrieben.

Das erfindungsgemäße Verfahren bietet den besonderen Vorteil, dass aufgrund der realistischen und eindeutigen Darstellung der in der Umgebung des Fahrzeuges befindlichen Objekte die Sicherheit bei der Durchführung bei Fahrzeugmanövern gesteigert wird.

Außerdem bietet die vorliegende Erfindung den Vorteil, dass der Datenzugriff auf verschiedene 3D-Datenmodelle besonders schnell erfolgen kann.

Außerdem bietet die vorliegende Erfindung den Vorteil, dass die Datenbank über eine besonders große Anzahl von verschiedenen 3D-Datenmodellen verfügt.

Darüber hinaus ist es möglich, wenn sich ein 3D-Datenmodell des erkannten Objekttyps nicht in dem Datenspeicher des Fahrzeuges befindet, erfolgt dann ein Herunterladen des 3D-Datenmodells über eine drahtlose Schnittstelle von der entfernten Datenbank.

Im Weiteren werden mögliche Ausführungsformen des erfindungsgemäßen Verfahrens und der erfindungsgemäßen Vorrichtung zur Anzeige von Objekten auf einer Fahrzeuganzeige des Fahrzeuges unter Bezugnahme auf die beigefügten Figuren näher erläutert.

Es zeigen:
- Fig. 1: eine schematische Darstellung einer beispielhaften Verkehrssituation zur Erläuterung eines dem erfindungsgemäßen Verfahren und der erfindungsgemäßen Vorrichtung zugrunde liegenden Problems;
- Fig. 2: ein Blockschaltbild einer möglichen Ausführungsform des erfindungsgemäßen Surround View-Systems;
- Fig. 3: ein Blockschaltbild einer weiteren Ausführungsform des erfindungsgemäßen Surround View-Systems;
- Fig. 4: ein Blockschaltbild einer weiteren Ausführungsform des erfindungsgemäßen Surround View-Systems;
- Fig. 5: ein Ablaufdiagramm einer möglichen Ausführungsform des erfindungsgemäßen Verfahrens;
- Fig. 6: ein Signaldiagramm zur Darstellung einer möglichen Ausführungsform des erfindungsgemäßen Verfahrens;
- Fig. 7: einen weiteren Anwendungsfall für das erfindungsgemäße Verfahren

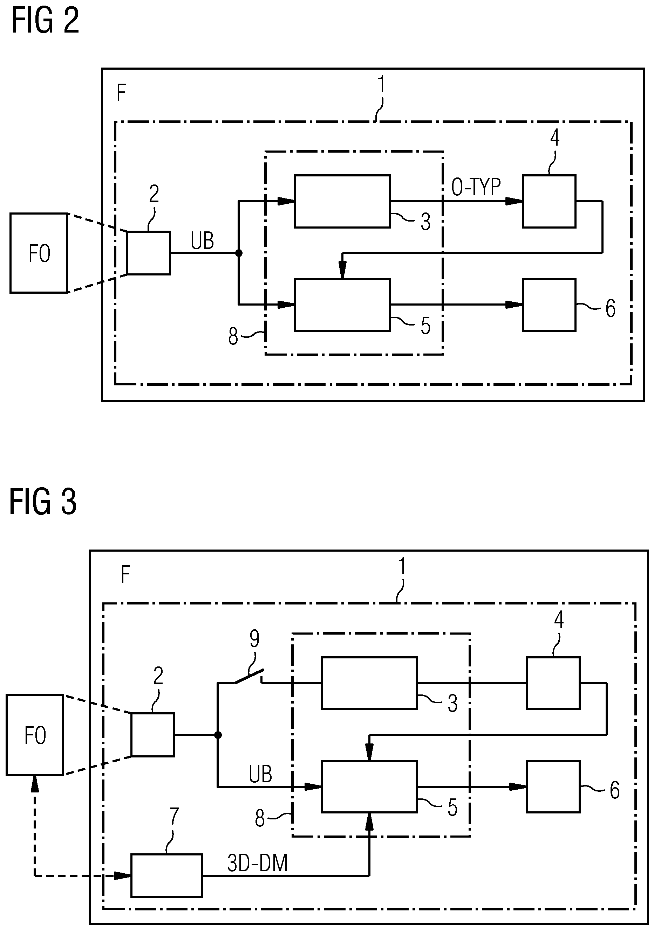

Wie man in Fig. 2 erkennen kann, enthält bei dem dargestellten Ausführungsbeispiel ein Fahrzeug F ein Surround View-System 1, welches eine oder mehrere Fahrzeugsensoreinheiten 2, insbesondere Fahrzeugkameras, aufweist. Die Fahrzeugsensoreinheiten 2 können beispielsweise Fahrzeugkameras umfassen, die Bilder der Fahrzeugumgebung in einem sichtbaren Frequenzbereich liefern. Darüber hinaus kann die Fahrzeugsensoreinheit 2 einen Radarsensor aufweisen, welcher Radardaten bzw. Radarbilder der Umgebung des Fahrzeuges F liefert. Bei dem in Fig. 2 dargestellten Beispiel erfasst die Fahrzeugsensoreinheit 2 ein in der Umgebung des Fahrzeuges F befindliches Objekt O, beispielsweise ein Fahrzeugobjekt FO. Bei dem Objekt O handelt es sich um ein bewegliches Objekt, beispielsweise ein Fahrzeugobjekt FO, oder um ein unbewegliches Objekt, beispielsweise ein Gebäude oder dergleichen. Wie man in Fig. 2 erkennen kann, erfasst die Fahrzeugsensoreinheit 2, insbesondere die Fahrzeugkamera, das Objekt O von einer Seite. Jede Fahrzeugsensoreinheit 2 liefert ein Umgebungsbild von der Umgebung des Fahrzeuges F, wobei das Umgebungsbild eines oder mehrere Objekte O enthalten kann, die sich in der Umgebung des Fahrzeuges F befinden. Bei einer Bewegung des Fahrzeuges F, beispielsweise auf einer Straße, bewegen sich die Objekte O relativ zu dem Fahrzeug F. Die Fahrzeugsensoreinheit 2 gibt das aktuelle Umgebungsbild, welches beispielsweise das Objekt O enthält, an eine Klassifizierungseinheit 3 des Surround View-Systems 1 ab.

Die Klassifizierungseinheit 3 klassifiziert das Objekt O anhand von Objektmerkmalen zur Erkennung eines Objekttyps. Beispielsweise erkennt die Klassifizierungseinheit 3, dass es sich bei dem Objekt O um ein Fahrzeugobjekt FO handelt. Die Klassifizierungseinheit 3 kann eine Klassifizierung mit zunehmendem Klassifizierungsgenauigkeitsgrad vornehmen. Beispielsweise kann die Klassifizierungseinheit 3 anhand der Objektmerkmale feststellen, dass es sich bei dem Objekt O um ein Fahrzeugobjekt FO handelt, nämlich um ein Lastkraftwagen-Fahrzeugobjekt LKW-FO oder um ein Personenkraftwagen-Fahrzeugobjekt PKW-FO. Anhand einer Hierarchie der Objekte kann die Klassifizierungseinheit 3 die Klassifizierung mit zunehmendem Genauigkeitsgrad vornehmen. Beispielsweise kann die Klassifizierungseinheit 3 das erkannte PKW-Fahrzeugobjekt als ein Fahrzeug eines besonderen Typs erkennen, beispielsweise als eine Limousine oder einen Kombiwagen. Darüber hinaus kann beispielsweise eine weitere Klassifizierung dahingehend erfolgen, um welchen Fahrzeugtyp es sich genau handelt, beispielsweise um einen Kombi Audi A6. Bei dem dargestellten Ausführungsbeispiel erkennt die Klassifizierungseinheit 3 einen Objekttyp O-TYP des jeweiligen Objektes O, wobei mithilfe des erkannten Objekttyps aus einem Datenspeicher 4 ein entsprechendes dreidimensionales Datenmodell 3D-DM des erkannten Objekttyps O-TYP ausgelesen wird und durch eine Einfügeberechnungseinheit 5 in das Umgebungsbild UB an der Stelle des erkannten Fahrzeugobjektes FO eingefügt wird. Das aus dem Datenspeicher 4 ausgelesene dreidimensionale Fahrzeugdatenmodell 3D-DM des erkannten Fahrzeugobjektes FO wird somit an der Stelle bzw. Position innerhalb des Umgebungsbildes UB eingefügt, an der sich das Fahrzeugobjekt FO innerhalb des Umgebungsbildes UB befindet. Durch das Einfügen des dreidimensionalen Datenmodells 3D-DM des erkannten Fahrzeugobjektes FO generiert die Einfügeeinheit 5 eine 3D-Szene, welche die Umgebung des Fahrzeuges F einschließlich der erkannten Fahrzeugobjekte FO darstellt. Die generierte 3D-Szene wird durch eine Fahrzeuganzeige 6 des Surround View-Systems 1 einer Person innerhalb des Fahrzeuges F, insbesondere dem Fahrer, angezeigt. Ein Vorteil des in Fig. 2 dargestellten Ausführungsbeispiels besteht darin, dass auf der Fahrzeuganzeige 6 des Fahrzeuges F nicht nur eine sichtbare Seite des Objektes O dargestellt wird, sondern ein dreidimensionales entsprechendes Fahrzeugdatenmodell 3D-DM des Objektes O, sodass eine realistische Darstellung des Objektes O in der dreidimensionalen Szene erfolgt. Die Klassifizierungseinheit 3 und die Einfügeberechnungseinheit 5 sind vorzugsweise in einer Berechnungseinheit 8 integriert. Die Berechnungen, insbesondere Klassifizierungen, erfolgen dabei vorzugsweise in Echtzeit.

Fig. 3 zeigt ein weiteres Ausführungsbeispiel des erfindungsgemäßen Surround View-Systems 1. Bei dem in Fig. 3 dargestellten Ausführungsbeispiel enthält das Surround View-System 1 einen Transceiver 7, der von einem in der Nähe des Fahrzeuges F befindlichen Objekt O, insbesondere einem Fahrzeugobjekt FO, ein zu dem Fahrzeugobjekt FO zugehöriges 3D-Fahrzeugdatenmodell 3D-DM über eine drahtlose Downlink-Verbindung DL eines Telekommunikationssystems erhält. Der Transceiver 7 umfasst einen Empfänger und einen Sender. Der Empfänger des Transceivers 7 erhält von dem Fahrzeugobjekt FO, welches gleichzeitig von der Sensoreinheit 2 des Surround View-Systems 1 detektiert wird, ein 3D-Datenmodell des Fahrzeugobjektes FO oder zumindest eine Identifizierung ID des entsprechenden 3D-Fahrzeugdatenmodells. Die Klassifizierungseinheit 3 wird automatisch hinsichtlich der Klassifizierung des Fahrzeugobjektes FO deaktiviert bzw. mittels eines Schalters 9 abgeschaltet, wenn der Transceiver 7 ein Fahrzeugobjekt-Datenmodell des Fahrzeugobjektes FO über die drahtlose Schnittstelle DL erhält. Die Einfügeberechnungseinheit 5 fügt das über die drahtlose Schnittstelle von dem Empfänger des Transceivers 7 empfangene Fahrzeugobjekt-Datenmodell in das von der Fahrzeugsensoreinheit 2 gelieferte Umgebungsbild UB an der passenden Stelle ein und erzeugt auf diese Weise eine dreidimensionale Szene der Umgebung des Fahrzeuges F einschließlich des in der Umgebung befindlichen Objektes, die auf der Fahrzeuganzeige 6 des Surround View-Systems 1 dargestellt wird. Bei dem in Fig. 3 dargestellten Ausführungsbeispiel wird auf eine Klassifizierung innerhalb des Surround View-Systems 1 verzichtet, wenn der Empfänger des Transceivers 7 ein Fahrzeugobjekt-Datenmodell eines in der Umgebung befindlichen Fahrzeugobjektes FO erhält. Erfindungsgemäß kommt die Klassifizierungseinheit 3 nur zum Einsatz, wenn das in der Umgebung befindliche Objekt O kein entsprechendes 3D-Modell liefert. Die in Fig. 3 dargestellte Ausführungsform bietet somit den Vorteil, dass die Rechenbelastung der Klassifizierungseinheit 3 reduziert wird.

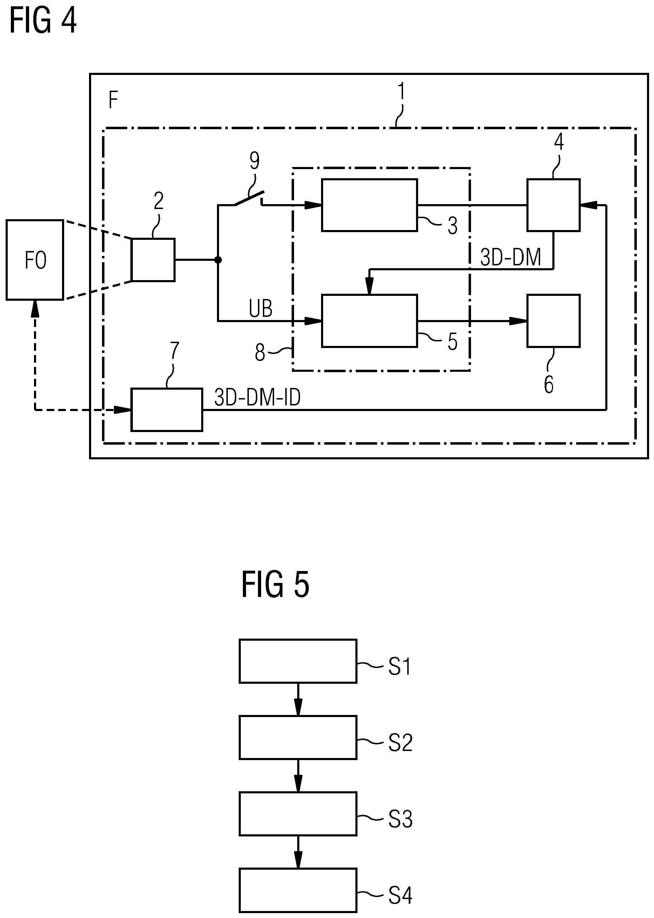

Fig. 4 zeigt ein weiteres Ausführungsbeispiel des erfindungsgemäßen Surround View-Systems 1, welches sich in einem Fahrzeug F befindet. Bei dem in Fig. 4 dargestellten Ausführungsbeispiel erhält der Empfänger des Transceivers 7 von dem Objekt O nicht ein Fahrzeugdatenmodell, sondern einen Identifizierer ID des Fahrzeugobjekt-Datenmodells DM. Mithilfe dieses erhaltenen Fahrzeugdatenmodell-Identifizierers DM-ID wird aus dem lokalen Datenspeicher 4 des Surround View-Systems 1 ein zugehöriges dreidimensionales Fahrzeugobjekt-Datenmodell 3D-DM ausgelesen und durch die Einfügeberechnungseinheit 5 an passender Stelle in das von der Fahrzeugsensoreinheit 2 gelieferte Umgebungsbild UB eingefügt, um eine 3D-Szene der Umgebung zu generieren. Die generierte 3D-Szene wird durch die Fahrzeuganzeige 6 angezeigt. Die in Fig. 4 dargestellte Ausführungsform bietet den Vorteil, dass für die drahtlose Schnittstelle nur eine Fahrzeugobjekt-Datenmodell-ID übertragen werden muss, sodass die erforderliche Bandbreite gering ist. Ferner kann die Übertragung der ID des Fahrzeugobjekt-Datenmodells je nach Komplexität und Datenumfang des Datenmodells wesentlich schneller erfolgen als die Übertragung eines kompletten Fahrzeugobjekt-Datenmodells.

Bei den in Fig. 3, 4 dargestellten Ausführungsformen kann die Übertragung des Fahrzeugobjekt-Datenmodells und/oder der Fahrzeugobjekt-Datenmodell-ID direkt über eine drahtlose Schnittstelle von Fahrzeug zu Fahrzeug erfolgen oder über ein Telekommunikationssystem T-SYS. Bei einer möglichen Ausführungsform überträgt das Fahrzeugobjekt FO über eine Uplink-Verbindung UL eine Modell-ID bzw. sein Fahrzeugdatenmodell, welches anschließend über eine Downlink-Verbindung DL an den Empfänger des Transceivers 7 innerhalb des Fahrzeuges F übertragen wird. Bei dem Telekommunikationssystem handelt es sich beispielsweise um ein Mobilfunksystem. Bei einer weiteren möglichen Ausführungsform des erfindungsgemäßen Systems, wie es in den Figuren 2, 3, 4 dargestellt wird, werden neben den Fahrzeugobjekt-Datenmodellen und/oder Fahrzeugobjekt-Datenmodell-IDs zusätzlich Positionsdaten zwischen den Fahrzeugen bzw. Fahrzeugobjekten FO ausgetauscht bzw. übertragen. Bei einer möglichen Ausführungsform berücksichtigt die Einfügeberechnungseinheit 5 beim Einfügen der Fahrzeugobjekt-Datenmodelle 3D-DM in das Umgebungsbild UB zusätzlich die aktuellen Positionsdaten der Fahrzeugobjekte. Bei einer möglichen Ausführungsform werden die Positionsdaten der Fahrzeuge bzw. der Fahrzeugobjekte FO durch in den Fahrzeugobjekten enthaltene Navigationssysteme geliefert. Bei einer möglichen Ausführungsform weist die in den Figuren 2, 3, 4 dargestellte Einfügeberechnungseinheit 5 eine CPU bzw. ein Mikroprozessor auf, der Positionsdaten von einem in dem Fahrzeug F befindlichen Navigationssystem erhält. Diese Positionsdaten umfassen die Positionsdaten des eigenen Fahrzeuges F und/oder die Positionsdaten von Fahrzeugobjekten, die sich in der näheren Umgebung des Fahrzeuges F innerhalb der Reichweite der Sensoreinheiten 2 befinden. Diese Positionsdaten umfassen zwei- oder dreidimensionale Koordinaten von Objekten O, insbesondere Fahrzeugobjekten FO, in der Nähe des Fahrzeuges F.

Bei einer weiteren möglichen Ausführungsform des erfindungsgemäßen Systems verbreiten Fahrzeugobjekte FO ihre eigenen 3D-Fahrzeugdatenmodelle und/oder 3D-Fahrzeugdatenmodell-Idenfizierer an andere Fahrzeugobjekte, welche sie ihrerseits an dritte Fahrzeugobjekte weiterleiten. Die Weiterleitung der 3D-Datenmodelle 3D-DM oder deren Identifizierer ID kann entweder direkt zwischen den Fahrzeugen erfolgen oder mittels Uplink- und Downlink-Verbindungen eines Telekommunikationssystems T-SYS. Durch das Weiterleiten von 3D-Fahrzeugdatenmodellen oder deren Identifizierer ist es für ein Fahrzeug F möglich, auch Fahrzeugobjekte FO zu erkennen, die von anderen Fahrzeugobjekten FO ganz oder teilweise verdeckt sind, wie beispielsweise in Fig. 1 dargestellt. Bei dem in Fig. 1 dargestellten Beispiel kann beispielsweise das Fahrzeugdatenobjekt FO2 sein Fahrzeugdatenmodell an das überholende Fahrzeugobjekt FO1 übertragen, welches anschließend das erhaltene Fahrzeugdatenmodell bzw. dessen zugehörigen Identifizierer an das Fahrzeug F überträgt. Bei einer bevorzugten Ausführungsform werden die Fahrzeugdatenmodelle und/oder deren Fahrzeugdatenmodell-Identifizierer zusammen mit den zugehörigen aktuellen Positionsdaten des zugehörigen Fahrzeugobjektes übertragen, sodass das Surround View-System SVS des Fahrzeuges F bestimmen kann, an welcher Stelle innerhalb der Umgebung sich beispielsweise das verdeckte Fahrzeugdatenobjekt FO2 genau befindet. Auf Basis der Positionsdaten kann dann die Einfügeberechnungseinheit 5 des erfindungsgemäßen Surround View-Systems 1 das direkt oder indirekt erhaltene Fahrzeugobjekt-Datenmodell 3D-DM an passender Stelle in das erfasste Umgebungsbild genau einfügen.

Fig. 5 zeigt ein Ablaufdiagramm eines Ausführungsbeispiels des erfindungsgemäßen Verfahrens zur Anzeige von Objekten O auf einer Fahrzeuganzeige.

In einem Schritt S1 werden zunächst eines oder mehrere Umgebungsbilder UB bereitgestellt, die Objekte O aufweisen, welche sich in der Umgebung des Fahrzeuges F befinden. Diese Umgebungsbilder UB werden vorzugsweise sensorisch erfasst, insbesondere mittels einer oder mehrerer Fahrzeugkameras und/oder mittels eines in dem Fahrzeug F befindlichen Radargerätes. Die von den verschiedenen Sensoren bzw. Sensoreinheiten erhaltenen Bilder, insbesondere Kamerabilder, können vorverarbeitet werden und zu einem Umgebungsbild zusammengesetzt werden. Ein Umgebungsbild kann die gesamte Umgebung des Fahrzeuges F oder relevante Teilausschnitte der Umgebung um das Fahrzeug herum darstellen. Das Umgebungsbild UB kann beispielsweise ein 360°-Panoramabild der Umgebung des Fahrzeuges F aufweisen. In dem Umgebungsbild UB befinden sich verschiedenartigste Objekte O, insbesondere bewegliche Fahrzeugobjekte FO und unbewegliche Objekte O, beispielsweise Gebäude oder Berge.

In einem weiteren Schritt S2 erfolgt eine Klassifizierung der Objekte O anhand von Objektmerkmalen zur Erkennung eines Objekttyps O-TYP des jeweiligen Objekts O. Eine Klassifizierung kann beispielsweise durch die in den Figuren 2 bis 4 dargestellte Klassifizierungseinheit 3 eines Surround View-Systems 1 erfolgen.

In einem weiteren Schritt S3 wird ein dem erkannten Objekttyp O-TYP des Objektes O entsprechendes 3D-Datenmodell zur Generierung einer in der Umgebung des Fahrzeuges F darstellenden 3D-Szene eingefügt. Bei einer möglichen Ausführungsform wird das 3D-Datenmodell 3D-DM des Objektes O durch Auswertung von erhaltenen Positionsdaten an einer passenden Stelle in das Umgebungsbild UB eingefügt bzw. dort platziert. Bei einer möglichen Ausführungsform werden diese Positionsdaten bzw. Positionskoordinaten von einem Navigationssystem des Fahrzeuges F bereitgestellt.

In einem weiteren Schritt S4 wird die generierte 3D-Szene auf einer Fahrzeuganzeige des Fahrzeuges F angezeigt.

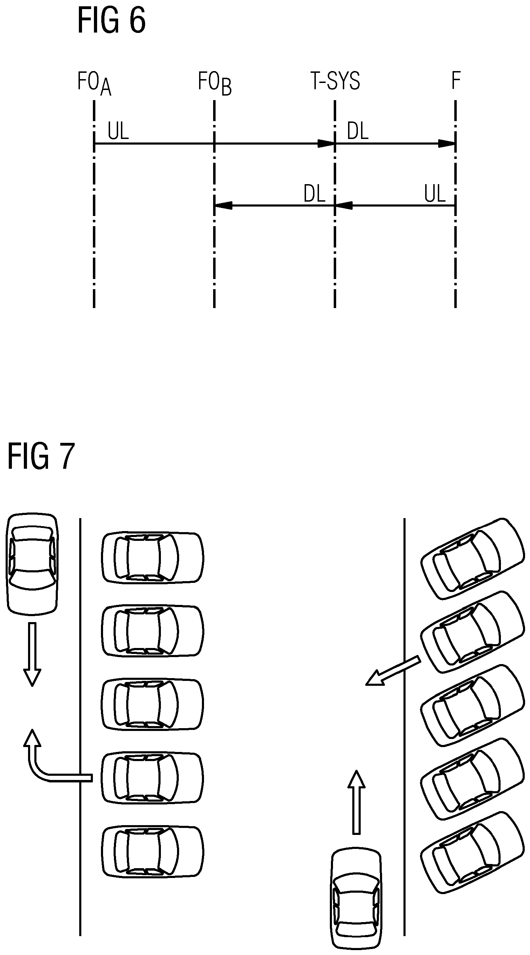

Fig. 6 zeigt schematisch eine Ausführungsvariante eines Systems, bei dem das erfindungsgemäße Verfahren eingesetzt werden kann. Bei der in Fig. 6 dargestellten Ausführungsvariante kommuniziert ein Fahrzeug F mit anderen Fahrzeugobjekten FOA, FOB über ein Telekommunikationssystem T-SYS, beispielsweise ein Mobilfunksystem. Beispielsweise kann ein in der Nähe des Fahrzeuges F befindliches Fahrzeugobjekt FOA über eine Uplink-Verbindung UL ein eigenes 3D-Fahrzeugdatenmodell oder eine zugehörige ID einschließlich Positionsdaten an eine Basisstation des Telekommunikationssystems übertragen, die daraufhin über eine Downlink-Verbindung DL das 3D-Datenmodell des Fahrzeuges FOA oder eine entsprechende ID vorzugsweise mit zugehörigen Positionsdaten an einen Empfänger des Fahrzeuges F überträgt. Dort wird das Fahrzeugdatenmodell des Fahrzeugobjektes FOA in ein Umgebungsbild UB an passender Stelle eingefügt. Darüber hinaus wird von dem eigenen Sender des Fahrzeuges F ein Fahrzeugdatenmodell bzw. eine entsprechende ID des Fahrzeuges F über eine Uplink-Datenverbindung UL des Telekommunikationssystems und von dort über eine Downlink-Verbindung DL an ein anderes Fahrzeugobjekt FOB gesendet. Neben dem Fahrzeugdatenmodell des eigenen Fahrzeuges F wird dabei vorzugsweise zusätzlich das empfangene Fahrzeugdatenmodell des Fahrzeugobjektes FOA oder eine entsprechende ID an das andere Fahrzeugobjekt FOB weitergeleitet. Darüber hinaus kann das Fahrzeug F die ID des eigenen Fahrzeugdatenmodells nach Empfang eines Fahrzeugdatenmodells von dem Fahrzeugobjekt FOA zur Empfangsbestätigung zurücksenden. Auf diese Weise tauschen die verschiedenen Fahrzeugobjekte FO ihre 3D-Fahrzeugdatenmodelle bzw. zugehörige IDs untereinander aus. Vorzugsweise werden dabei gleichzeitig die Positionsdaten der Fahrzeugobjekte FO untereinander ausgetauscht.

Bei einer alternativen Ausführungsform besitzen alle Fahrzeuge bzw. Fahrzeugobjekte FO eine zugehörige Fahrzeug-ID, welche das Fahrzeug eindeutig kennzeichnet. Diese Fahrzeug-IDs werden unter den Fahrzeugen FO ausgetauscht, wobei dann durch eine Datenbankabfrage eine zu der erhaltenen Fahrzeug-ID zugehörige Fahrzeugdatenmodell-ID abgefragt wird.

Bei einer möglichen Ausführungsform des erfindungsgemäßen Verfahrens erkennt die Fahrzeugsensoreinheit 2 des Surround View-Systems 1 einen Umriss des in der Umgebung befindlichen Objektes O sowie eine Textur bzw. Färbung. Bei einer möglichen Ausführungsform wird die Textur zusätzlich zur Klassifizierung herangezogen. Darüber hinaus ist es möglich, dass die Einfügeeinheit 5 die erkannte Textur bzw. Farbe eines Objektes in der Nähe des Fahrzeuges F, beispielsweise eines Fahrzeugobjektes, in das angezeigte 3D-Fahrzeugdatenmodell einfügt, sodass eine noch realistischere Darstellung des entsprechenden Objektes O auf der Fahrzeuganzeige 6 erfolgt.

Weitere Ausführungsformen des erfindungsgemäßen Verfahrens und Systems sind möglich. So kann es sich bei den Objekten O um Fahrzeugobjekte FO handeln, die sich auf Land bewegen, insbesondere Fahrzeuge oder Lastkraftwagen. Weiterhin kann es sich bei den Fahrzeugobjekten FO auch um Wasserfahrzeuge oder Luftfahrzeuge handeln. Bei einer möglichen Ausführungsform handelt es sich bei den übertragenen Fahrzeugdatenmodellen um relativ einfache Fahrzeugdatenmodelle, welche im Wesentlichen eine Oberfläche des entsprechenden Objektes O darstellen. Beispielsweise wird die Farbe und Kontur eines bestimmten Fahrzeugtyps in das Umgebungsbild UB zur Erzeugung der 3D-Szene eingefügt. Alternativ kann es sich bei dem übertragenen Fahrzeugdatenmodell auch um ein komplexes Fahrzeugdatenmodell des erkannten Fahrzeugobjektes FO handeln, welches neben der Oberfläche des Fahrzeuges F auch Daten hinsichtlich der inneren Struktur des betroffenen Fahrzeugobjektes FO bietet. Bei dieser Ausführungsvariante hat beispielsweise der Fahrer oder Kapitän des Fahrzeuges F die Möglichkeit, anhand des übertragenen Fahrzeugdatenmodells in die innere Struktur des in der Umgebung befindlichen Fahrzeugobjektes FO hineinzublicken und ggf. auch hineinzuzoomen. Bei dieser Ausführungsvariante kann somit der Fahrer des Fahrzeuges F mehr Informationen über den Aufbau und die Struktur des auf der Fahrzeuganzeige 6 innerhalb der 3D-Szene dargestellten Fahrzeugobjektes FO bedarfsweise erhalten.

Bei einer möglichen Ausführungsform bewegt sich das in der Umgebung befindliche Objekt O relativ zu dem eigenen Fahrzeug F mit einer Relativgeschwindigkeit. Diese Relativgeschwindigkeit V wird bei einer möglichen Ausführungsform durch das Surround View-System 1 erkannt und bei der Platzierung des zugehörigen 3D-Fahrzeugdatenmodells in das Umgebungsbild UB berücksichtigt. Bei dieser Ausführungsvariante kann eine Platzierung bzw. Einfügung eines 3D-Fahrzeugdatenmodells noch genauer geschehen, da neben Positionsdaten auch Relativgeschwindigkeiten bei der Berechnung der Platzierungsposition des 3D-Fahrzeugdatenmodells in die 3D-Szene durch die Einfügeeinheit 5 mitberücksichtigt werden.

Die Klassifizierungseinheit 3 des Surround View-Systems 1 kann beispielsweise den Typ und die Farbe eines anderen Fahrzeugobjektes FO in der Umgebung des eigenen Fahrzeuges erkennen und klassifizieren. Ein entsprechendes Fahrzeugdatenmodell wird dann als 3D-Datenobjekt in die 3D-Szene eingefügt bzw. platziert.

Das in die 3D-Szene eingefügte Fahrzeugdatenmodell 3D-DM zeigt ein Fahrzeugobjekt FO in der Nähe des Fahrzeuges F von allen Seiten, selbst von Seiten, die von den Fahrzeugsensoreinheiten 2 des Fahrzeuges F nicht erfasst werden können. Darüber hinaus können auch Fahrzeugdatenmodelle von Fahrzeugobjekten dargestellt werden, die durch andere Objekte, insbesondere andere Fahrzeugobjekte, dauernd oder zeitweise verdeckt werden. Auf diese Weise wird die in der 3D-Szene dargestellte dreidimensionale Fahrzeugumgebung für den Fahrer des Fahrzeuges F realistischer dargestellt, sodass seine Fahrentscheidungen und seine Fahrorientierung verbessert wird. Aufgrund der besseren Fahrentscheidungen wird zudem die Sicherheit beim Fahren des Fahrzeuges F signifikant gesteigert.

Fig. 7 zeigt einen weiteren Anwendungsfall für das erfindungsgemäße Verfahren. Hier werden Objekte, insbesondere andere Fahrzeugobjekte, in einer 3D-Szene auf einer Anzeige eines Fahrzeuges während eines Parkvorgangs angezeigt.

## Patentansprüche

1. Verfahren zur Anzeige von Objekten auf einer Fahrzeuganzeige eines Fahrzeuges (F) mit den Schritten:
(a) Bereitstellen (S1) von durch mindestens einen Fahrzeugsensor (2) des Fahrzeuges (F), insbesondere eine Fahrzeugkamera des Fahrzeuges (F), erfassten Umgebungsbildern (UB), die Objekte (O) aufweisen, die sich in der Umgebung des Fahrzeuges (F) befinden;
(b) Klassifizieren (S2) der Objekte (O) anhand von Objektmerkmalen zur Erkennung eines Objekttyps (O-TYP) des jeweiligen Objektes (O);
(c) Einfügen (S3) eines dem erkannten Objekttyp (O-TYP) des Objektes (O) entsprechenden 3D-Fahrzeugdatenmodells (3D-DM) zur Generierung einer 3D-Szene, welche die Umgebung des Fahrzeuges (F) darstellt; und
(d) Anzeigen (S4) der generierten 3D-Szene auf der Fahrzeuganzeige,
wobei die Objekte (O) Fahrzeugobjekte (FO) aufweisen, die sich in der Umgebung des Fahrzeuges (F) befinden und jeweils ein zugehöriges 3D-Fahrzeugdatenmodell (3D-DM) des Fahrzeugobjektes (FO) und/oder eine Identifizierung des 3D-Fahrzeugdatenmodells (3D-DM) an das Fahrzeug (F) über eine drahtlose Schnittstelle übertragen,
wobei das Klassifizieren (S2) der Objekte (O) nur durchgeführt wird, wenn das Objekt (0) kein entsprechendes 3D-Fahrzeugdatenmodell (3D-DM) liefert,
wobei das dreidimensionale Fahrzeugdatenmodell (3D-DM) des erkannten Objekttyps (O-TYP) über eine drahtlose Downlink-Verbindung (DL) von einer entfernten Datenbank heruntergeladen wird, und
wobei ein von einem Empfänger des Fahrzeuges (F) über eine drahtlose Downlink-Verbindung (DL) des Telekommunikationssystems empfangenes 3D-Fahrzeugdatenmodell (3D-DM) und/oder eine Identifizierung des 3D-Fahrzeugdatenmodells (3D-DM) eines in der Nähe des Fahrzeuges (F) befindlichen anderen Fahrzeugobjektes (FO) von einem Sender des Fahrzeuges (F) über eine drahtlose Uplink-Verbindung (UL) des Telekommunikationssystems an andere Fahrzeugobjekte (FO) in der Umgebung des Fahrzeuges (F) weitergeleitet wird.

2. Verfahren nach Anspruch 1,
wobei die von anderen Fahrzeugobjekten (FO) bereitgestellten 3D-Fahrzeugdatenmodelle (3D-DM) und/oder Identifizierungen der 3D-Fahrzeugdatenmodelle (3D-DM) von einem Empfänger des Fahrzeuges (F) über eine drahtlose Downlink-Verbindung (DL) eines Telekommunikationssystems empfangen werden.

3. Verfahren nach einem der vorangehenden Ansprüche,
wobei ein 3D-Fahrzeugdatenmodell (3D-DM) und/oder eine Identifizierung des 3D-Fahrzeugdatenmodells (3D-DM) des Fahrzeuges (F) von einem Sender des Fahrzeuges (F) über eine drahtlose Uplink-Verbindung (UL) eines Telekommunikationssystems an andere Fahrzeugobjekte (FO), die sich in der Umgebung des Fahrzeuges (F) befinden, gesendet wird.

4. Verfahren nach einem der vorangehenden Ansprüche, wobei die 3D-Fahrzeugdatenmodelle (3D-DM) und/oder Identifizierungen von 3D-Fahrzeugdatenmodellen (3D-DM) des Fahrzeuges (F) oder eines anderen Fahrzeugobjektes (FO) zusammen mit einer momentanen Position des jeweiligen Fahrzeuges (F) oder Fahrzeugobjektes (FO) übertragen werden.

5. Surround View-System (1) für ein Fahrzeug (F) mit:
- mindestens einer Fahrzeugsensoreinheit (2), insbesondere einer Fahrzeugkamera, welche dazu ausgebildet ist, Umgebungsbilder bereitzustellen, welche Objekte (O) aufweisen, die sich in der Umgebung des Fahrzeuges (F) befinden; und
- einer Berechnungseinheit (8), die dazu ausgebildet ist, die in den Umgebungsbildern enthaltenen Objekte (O) zur Erkennung von Objekttypen der Objekte zu klassifizieren und 3D-Fahrzeugdatenmodelle (3D-DM) der klassifizierten Objekte an eine Position der erkannten Objekte in die Umgebungsbilder zur Generierung einer 3D-Szene einzufügen, die auf einer mit der Berechnungseinheit (8) verbundenen Fahrzeuganzeige (6) angezeigt wird,
wobei andere Objekte (O), insbesondere Fahrzeugobjekte (FO), die sich in der Umgebung des Fahrzeuges (F) befinden, dazu ausgebildet sind, eigene 3D-Fahrzeugdatenmodelle (3D-DM) und/oder Identifizierungen von 3D-Fahrzeugdatenmodellen (3D-DM) über eine drahtlose Datenverbindung an das Fahrzeug (F) zu übertragen,
wobei die Berechnungseinheit dazu ausgebildet ist, das Klassifizieren der Objekte (O) nur durchzuführen, wenn das Objekt (0) kein entsprechendes dreidimensionales Fahrzeugdatenmodell (3D-DM) liefert,
wobei ein Empfänger des Fahrzeuges (F) dazu ausgebildet ist, das dreidimensionale Fahrzeugdatenmodell (3D-DM) des erkannten Objekttyps (O-TYP) über eine drahtlose Downlink-Verbindung (DL) von einer entfernten Datenbank herunterzuladen, und
wobei das Fahrzeug (F) dazu ausgebildet ist, erhaltene 3D-Fahrzeugdatenmodelle (3D-DM) und/oder Identifizierungen von 3D-Fahrzeugdatenmodellen (3D-DM) von klassifizierten Objekten, die sich in der Umgebung des Fahrzeuges (F) befinden, an andere Fahrzeugobjekte (FO), die sich in der Umgebung des Fahrzeuges (F) befinden, über eine drahtlose Uplink-Verbindung (UL) des Telekommunikationssystems weiterzuleiten.

6. Surround View-System nach Anspruch 5,
wobei das Fahrzeug (F) dazu ausgebildet ist, ein eigenes 3D-Fahrzeugdatenmodell (3D-DM) und/oder einen Identifizierungen des eigenen 3D-Fahrzeugdatenmodells (3D-DM) an andere Fahrzeuge, die sich in der Umgebung des Fahrzeuges (F) befinden, über eine drahtlose Uplink-Datenverbindung (UL) eines Telekommunikationssystems zu übertragen.

7. Surround View-System nach Anspruch 5 oder 6,
wobei das Fahrzeug (F) dazu ausgebildet ist, seine eigene aktuelle Position zu erfassen, und diese Position an andere Fahrzeugobjekte (FO), die sich in der Umgebung des Fahrzeuges (F) befinden, über eine drahtlose Uplink-Datenverbindung (UL) des Telekommunikationssystems zu übertragen.

8. Fahrzeug mit einem Surround View-System (1) nach einem der vorangehenden Ansprüche 5 bis 7 und mit einem Navigationssystem, welches dazu ausgebildet ist, Positionsdaten des eigenen Fahrzeuges (F) und/oder Positionsdaten von anderen Fahrzeugobjekten (FO), die sich in der Umgebung des Fahrzeuges (F) befinden, bereitzustellen.

## Claims

1. Method for displaying objects on a vehicle display of a vehicle (F) comprising the following steps:
(a) providing (S1) environment images (UB) comprising objects (O) situated in the environment of the vehicle (F), said environment images being captured by at least one vehicle sensor (2) of the vehicle (F), in particular a vehicle camera of the vehicle (F);
(b) classifying (S2) the objects (O) on the basis of object features in order to recognize an object type (O-TYP) of the respective object (O);
(c) inserting (S3) a 3D vehicle data model (3D-DM) corresponding to the recognized object type (O-TYP) of the object (O) in order to generate a 3D scene representing the environment of the vehicle (F); and
(d) displaying (S4) the generated 3D scene on the vehicle display,
wherein the objects (O) comprise vehicle objects (FO) which are situated in the environment of the vehicle (F) and in each case transmit an associated 3D vehicle data model (3D-DM) of the vehicle object (FO) and/or an identification of the 3D vehicle data model (3D-DM) to the vehicle (F) via a wireless interface,
wherein classifying (S2) the objects (O) is only carried out if the object (O) does not supply a corresponding 3D vehicle data model (3D-DM),
wherein the three-dimensional vehicle data model (3D-DM) of the recognized object type (O-TYP) is downloaded from a remote database via a wireless downlink connection (DL), and
wherein a 3D vehicle data model (3D-DM) received by a receiver of the vehicle (F) via a wireless downlink connection (DL) of the telecommunication system and/or an identification of the 3D vehicle data model (3D-DM) of another vehicle object (FO) situated in the vicinity of the vehicle (F) are/is forwarded by a transmitter of the vehicle (F) via a wireless uplink connection (UL) of the telecommunication system to other vehicle objects (FO) in the environment of the vehicle (F).

2. Method according to Claim 1,
wherein the 3D vehicle data models (3D-DM) and/or identifications of the 3D vehicle data models (3D-DM) provided by other vehicle objects (FO) are received by a receiver of the vehicle (F) via a wireless downlink connection (DL) of a telecommunication system.

3. Method according to either of the preceding claims,
wherein a 3D vehicle data model (3D-DM) and/or an identification of the 3D vehicle data model (3D-DM) of the vehicle (F) are/is transmitted by a transmitter of the vehicle (F) via a wireless uplink connection (UL) of a telecommunication system to other vehicle objects (FO) situated in the environment of the vehicle (F).

4. Method according to any of the preceding claims,
wherein the 3D vehicle data models (3D-DM) and/or identifications of 3D vehicle data models (3D-DM) of the vehicle (F) or of another vehicle object (FO) are transmitted together with an instantaneous position of the respective vehicle (F) or vehicle object (FO).

5. Surround-view system (1) for a vehicle (F) comprising:
- at least one vehicle sensor unit (2), in particular a vehicle camera, which is configured to provide environment images comprising objects (O) situated in the environment of the vehicle (F); and
- a computation unit (8) configured to classify the objects (O) contained in the environment images in order to recognize object types of the objects, and to insert 3D vehicle data models (3D-DM) of the classified objects at a position of the recognized objects in the environment images in order to generate a 3D scene, which is displayed on a vehicle display (6) connected to the computation unit (8),
wherein other objects (O), in particular vehicle objects (FO), situated in the environment of the vehicle (F) are configured to transmit their own 3D vehicle data models (3D-DM) and/or identifications of 3D vehicle data models (3D-DM) via a wireless data connection to the vehicle (F),
wherein the computation unit is configured to carry out the classifying of the objects (O) only if the object (O) does not supply a corresponding three-dimensional vehicle data model (3D-DM),
wherein a receiver of the vehicle (F) is configured to download the three-dimensional vehicle data model (3D-DM) of the recognized object type (O-TYP) from a remote database via a wireless downlink connection (DL), and
wherein the vehicle (F) is configured to forward obtained 3D vehicle data models (3D-DM) and/or identifications of 3D vehicle data models (3D-DM) of classified objects situated in the environment of the vehicle (F) to other vehicle objects (FO) situated in the environment of the vehicle (F) via a wireless uplink connection (UL) of the telecommunication system.

6. Surround-view system according to Claim 5,
wherein the vehicle (F) is configured to transmit its own 3D vehicle data model (3D-DM) and/or an identification of its own 3D vehicle data model (3D-DM) to other vehicles situated in the environment of the vehicle (F) via a wireless uplink data connection (UL) of a telecommunication system.

7. Surround-view system according to Claim 5 or 6,
wherein the vehicle (F) is configured to detect its own current position, and to transmit this position to other vehicle objects (FO) situated in the environment of the vehicle (F) via a wireless uplink data connection (UL) of the telecommunication system.

8. Vehicle comprising a surround-view system (1) according to any of the preceding claims 5 to 7 and comprising a navigation system configured to provide position data of the ego vehicle (F) and/or position data of other vehicle objects (FO) situated in the environment of the vehicle (F).

## Revendications

1. Procédé permettant d'afficher des objets sur un affichage de véhicule d'un véhicule (F), comprenant les étapes consistant à :
(a) fournir (S1) des images d'environnement (UB), détectées par au moins un capteur de véhicule (2) du véhicule (F), en particulier une caméra de véhicule du véhicule (F), qui présentent des objets (O) qui se trouvent dans l'environnement du véhicule (F) ;
(b) classifier (S2) les objets (O) à l'aide des particularités d'objet permettant de reconnaître un type d'objet (O-TYP) de l'objet (O) respectif ;
(c) insérer (S3) un modèle de données de véhicule 3D (3D-DM) correspondant au type d'objet (O-TYP) reconnu de l'objet (O) pour générer une scène 3D qui représente l'environnement du véhicule (F) ; et
(d) afficher (S4) la scène 3D générée sur l'affichage de véhicule,
dans lequel les objets (O) présentent des objets de véhicule (FO) qui se trouvent dans l'environnement du véhicule (F) et transmettent respectivement un modèle de données de véhicule 3D (3D-DM) associé de l'objet de véhicule (FO) et/ou une identification du modèle de données de véhicule 3D (3D-DM) au véhicule (F) par une interface sans fil,
dans lequel la classification (S2) de l'objet (O) n'est exécutée que si l'objet (O) ne fournit aucun modèle de données de véhicule 3D (3D-DM) correspondant,
dans lequel le modèle de données de véhicule en trois dimensions (3D-DM) du type d'objet reconnu (O-TYP) est téléchargé sur une liaison descendante sans fil (DL) à partir d'une base de données distante, et
dans lequel un modèle de données de véhicule 3D (3D-DM) reçu par un récepteur du véhicule (F) sur une liaison descendante sans fil (DL) du système de télécommunication et/ou une identification du modèle de données de véhicule 3D (3D-DM) d'un autre objet de véhicule (FO) se trouvant à proximité du véhicule (F) sont retransmis par un émetteur du véhicule (F) sur une liaison ascendante sans fil (UL) du système de télécommunication à d'autres objets de véhicule (FO) dans l'environnement du véhicule (F).

2. Procédé selon la revendication 1, dans lequel les modèles de données 3D (3D-DM) fournis par d'autres objets de véhicule (FO) et/ou les identifications des modèles de données de véhicule 3D (3D-DM) sont reçus par un récepteur du véhicule (F) sur une liaison descendante sans fil (DL) d'un système de télécommunication.

3. Procédé selon l'une quelconque des revendications précédentes, dans lequel un modèle de données de véhicule 3D (3D-DM) et/ou une identification du modèle de données de véhicule 3D (3D-DM) du véhicule (F) sont envoyés par un émetteur du véhicule (F) sur une liaison ascendante sans fil (UL) d'un système de télécommunication à d'autres objets de véhicule (FO) qui se trouvent dans l'environnement du véhicule (F).

4. Procédé selon l'une quelconque des revendications précédentes, dans lequel les modèles de données de véhicule 3D (3D-DM) et/ou les identifications de modèles de données de véhicule 3D (3D-DM) du véhicule (F) ou d'un autre objet de véhicule (FO) sont transmis avec une position instantanée du véhicule (F) ou de l'objet de véhicule (FO) respectif.

5. Système de visualisation panoramique (1) pour un véhicule (F), comprenant :
- au moins une unité de capteur de véhicule (2), en particulier une caméra de véhicule, qui est réalisé pour fournir des images d'environnement qui présentent des objets (O) qui se trouvent dans l'environnement du véhicule (F) ; et
- une unité de calcul (8) qui est réalisée pour classifier les objets (O) contenus dans les images d'environnement afin de reconnaître des types d'objet des objets, et pour insérer des modèles de données de véhicule 3D (3D-DM) des objets classifiés à une position des objets reconnus dans les images d'environnement afin de générer une scène 3D qui est affichée sur un affichage de véhicule (6) relié à l'unité de calcul (8),
dans lequel d'autres objets (O), en particulier des objets de véhicule (FO), qui se trouvent dans l'environnement du véhicule (F) sont réalisés pour transmettre leurs propres modèles de données de véhicule 3D (3D-DM) et/ou identifications de modèles de données de véhicule 3D (3D-DM) au véhicule (F) sur une liaison de données sans fil,
dans lequel l'unité de calcul est réalisée pour effectuer la classification des objets (O) uniquement si l'objet (O) ne fournit aucun modèle de données de véhicule en trois dimensions (3D-DM) correspondant,
dans lequel un récepteur du véhicule (F) est réalisé pour télécharger le modèle de données de véhicule en trois dimensions (3D-DM) du type d'objet reconnu (O-TYP) sur une liaison descendante sans fil (DL) à partir d'une base de données distante, et
dans lequel le véhicule (F) est réalisé pour retransmettre des modèles de données de véhicule 3D (3D-DM) reçus et/ou des identifications de modèles de données de véhicule 3D (3D-DM) d'objet classifiés qui se trouvent dans l'environnement du véhicule (F) à d'autres objets de véhicule (FO) qui se trouvent dans l'environnement du véhicule (F) sur une liaison ascendante sans fil (UL) du système de télécommunication.

6. Système de visualisation panoramique selon la revendication 5, dans lequel le véhicule (F) est réalisé pour transmettre son propre modèle de données de véhicule 3D (3D-DM) et/ou une identification de son propre modèle de données de véhicule 3D (3D-DM) à d'autres véhicules qui se trouvent dans l'environnement du véhicule (F) sur une liaison de données ascendante sans fil (UL) d'un système de télécommunication.

7. Système de visualisation panoramique selon la revendication 5 ou 6, dans lequel le véhicule (F) est réalisé pour détecter sa propre position actuelle, et pour transmettre cette position à d'autres objets de véhicule (FO) qui se trouvent dans l'environnement du véhicule (F) sur une liaison de données ascendante sans fil (UL) du système de télécommunication.

8. Véhicule comprenant un système de visualisation panoramique (1) selon l'une quelconque des revendications précédentes 5 à 7 et un système de navigation qui est réalisé pour fournir des données de position du véhicule propre (F) et/ou des données de position d'autres objets de véhicule (FO) qui se trouvent dans l'environnement du véhicule (F).
